# EUROPÄISCHE PATENTANMELDUNG

(11) **EP 2 845 459 A1**
(43) Veröffentlichungstag der Anmeldung: **11.03.2015**
(21) Anmeldenummer: 14002604.8
(22) Anmeldetag: 25.07.2014
(51) Int. Cl.: A01D 17/10

(54) **Siebkettenförderer für Hackfruchterntemaschinen**

(30) Priorität: 10.08.2013 DE 102013013446
(71) Anmelder: Grimme Landmaschinenfabrik GmbH & Co. KG, 49401 Damme (DE)
(72) Erfinder: Dettmer, Franz-Josef, 49577 Ankum (DE); Hagelüken, André, 67346 Speyer (DE)
(74) Vertreter: Pott, Ulrich

(57) **Zusammenfassung**

Ein Siebkettenförderer für Hackfruchterntemaschinen ist im Bereich zumindest eines jeweilige Querförderstäbe (2) aufnehmenden Trägerriemens (3) mit einem Riemenschloss (4,4',4'') versehen. Dieses Riemenschloss weist im Bereich von jeweilige Riemenenden (5,6) erfassenden Anschlussstücken (7,8) zumindest eine scharnierartige Gelenkverbindung (G,G',G'') auf. Das erfindungsgemäße Konzept ist darauf gerichtet, dass die Gelenkverbindung als eine zumindest gegen ein Eindringen von Schmutzpartikeln abdichtbare Bauteilpaarung ausgebildet wird.

## Beschreibung

Die Erfindung betrifft einen Siebkettenförderer in Form eines Siebstabbandes für Hackfruchterntemaschinen gemäß dem Oberbegriff des Anspruchs 1.

Gemäß DE 1 756 050 U1 ist ein gattungsbildendes Fördersiebband vorgeschlagen, dessen jeweilige als Querförderstäbe angeordnete Siebbandstäbe im Bereich eines als Trägerriemen wirkenden Gurtes seitlich fixiert sind. Dabei sind die aus verstärktem Gurtmaterial bestehenden Riemenenden mittels eines Scharnier-Gelenkes lösbar verbunden, wobei ein jeweiliger Siebbandstab in Form eines Scharnierbolzens wirksam ist (ähnlich: DE 32 46 530 C2). Auch bei einem Verbindungsschloss gemäß DE 1 084 984 A sind im Bereich der Riemenenden jeweilige Anschlussstücken vorgesehen. Diese bilden mittels eines drehelastischen, mit beiden Anschlussteilen drehfest verbunden Zwischengliedes das Riemenschloss. Die dabei vorgesehenen Schraubverbindungen sind wenig belastungsstabil, so dass das Riemenschloss beim Einsatz des Förderers einem hohen Verschleiß unterliegt.

Gemäß DE 31 25 310 A1 ist ein Siebkettenförderband vorgeschlagen, bei dem das Riemenschloss mit einem etwa H-förmigen Zwischenkupplungsstück so ausgebildet ist, dass die mit Querbohrungen versehenen Anschlussstücke ebenfalls mit den für das System vorgesehenen Kettenstäben verbunden werden können. Bei einem Siebkettenförderband gemäß EP 0 312 629 B1 ist das Riemenschloss als ein gesondertes Scharnier ausgebildet, dessen die Gelenkaugen tragenden Anschlussplatten jeweils ein freies Riemenende untergreifen und dabei gemeinsam mit je einem auf der Oberseite des Riemenendes angeordneten Druckstück die Riemenenden fixieren. Damit ist ein vergleichsweise hoch bauendes Riemenschloss geschaffen, das einem intensiven Verschleiß ausgesetzt ist und damit die Standzeit des Förderers begrenzt.

Bei einer Endlosverbindung für Siebstabbänder gemäß DE 34 06 333 A1 sind jeweilige Laschen im Bereich der Riemenenden vorgesehen. Diese begrenzen ein gemeinsames Verbindungselement seitlich, wobei dieses und die Laschen von jeweiligen Siebbandstäben durchgriffen werden. Eine ähnliche Konstruktion ist in DE 34 07 167 A1 gezeigt, wobei die jeweiligen Laschen mit Verbreiterungen versehen sind, so dass für den sich bewegenden Förderer verbesserte Auflagepunkte definiert sind. Auch die Konstruktion gemäß DE 34 29 004 C2 ist mit einem Laschen aufweisenden Zwischenstück versehen, wobei in dessen Bereich auf einer Verbindungsbrücke ein zusätzlicher der Querstäbe fixiert werden kann.

Bei einer gemäß DD 270 648 A1 gezeigten Kettenschlossverbindung ist ein spezielles Einsteckglied im Bereich des Riemenschlosses vorgesehen, das mit innenseitig zu den Querstäben vorstehenden Ansatzteilen versehen ist und damit die Querförderstäbe erfasst. Ähnliche Konstruktionen sind in DD 270 649 A1 und DD 272 212 A1 gezeigt, wobei jeweils variable Ausführungen von Stehbolzen bzw. Schraubverbindern vorgesehen sind.

Bei einem Siebbandstab gemäß DE 39 03 921 A1 werden die Bandenden im Bereich der Anschlussstücke in jeweiligen U-förmigen Armaturen aus Metall mittels nietartiger Befestigungselemente erfasst. Dabei sind am freien Ende der Armaturen ineinander greifende Stege angeformt, die zur Aufnahme eines Schließbolzens dienen. Eine ähnliche Konstruktion ist in DE 297 16 333 U1 gezeigt, wobei dieses Riemenschloss im Bereich der Anschlussstücke jeweils gegenüberliegend eine Mittelöse und zwei Randösen aufweist, die durch einen Querbolzen gelenkig verbunden sind. Damit weisen die paarweise zusammenwirkenden Anschlussstücke konform ineinandergreifende Verbindungsprofile auf, in deren Bereich ein jeweiliger Querförderstab mit den Anschlussstücken verbunden ist.

Der praktische Einsatz der aus dem vorbeschriebenen Stand der Technik bekannten Riemenschlösser an Siebkettenförderern für Hackfruchterntemaschinen hat gezeigt, dass durch die im Erntebetrieb auftretenden Verschmutzungen der Bauteile - insbesondere im Bereich der Schließpaarung des Riemenschlosses - ein erhöhter Verschleiß eintritt und damit die Einsatzzeit derartiger Siebkettenförderer nachteilig begrenzt ist.

Die Erfindung befasst sich mit dem Problem, einen Siebkettenförderer für Hackfruchterntemaschinen so zu gestalten, dass zumindest im Bereich des die Riemenenden erfassenden Riemenschlosses ein geringerer Verschleiß auftritt, damit die Standzeit des Systems erhöht werden kann und durch einfachere Reparatur ein schneller Wiedereinsatz defekter Baugruppen möglich ist.

Die Erfindung löst diese Aufgabe mit einem Siebkettenförderer mit den Merkmalen des Anspruchs 1. Hinsichtlich weiterer Ausgestaltungen des Siebkettenförderers wird auf die Ansprüche 2 bis 28 verwiesen.

Ein Siebkettenförderer für Hackfruchterntemaschinen ist im Bereich seines zumindest einen die jeweiligen Querförderstäbe aufnehmenden Trägerriemens mit einem Riemenschloss versehen. Dieses weist im Bereich von die jeweiligen Riemenenden erfassenden Anschlussstücken zumindest eine scharnierartige Gelenkverbindung auf. Von dieser Grundkonstruktion ausgehend sieht das erfindungsgemäße Konzept vor, dass die zumindest eine Gelenkverbindung als eine zumindest gegen ein Eindringen von Schmutzpartikeln abdichtbare Bauteilpaarung ausgebildet wird. Dazu ist die Gelenkverbindung als Bauteilpaarung ausgebildet, welche gegen Eindringen von Schmutz mit mindestens einer Abdeckung ausgestattet ist.

Mit diesem effizienten Schutz durch eine neuartige Abdichtung im Bereich eines "sensiblen" Belastungsbereichs des Siebkettenförderers wird erreicht, dass - auch bei Verwendung unterschiedlichster Abdichtungsformen - ein Schutz der im Bereich des Riemenschlosses unter Reibbelastung zusammenwirkenden Bauteilpaarungen wirksam ist. Damit können die bei einem Rodevorgang, beispielsweise bei der Rüben- oder Kartoffelernte, auftretenden feinteiligen Erdbestandteile, Staubpartikel, Steine, Splitt o. dgl. abrasiv wirkenden Verschmutzungen nicht zwischen die rotatorisch und/oder translatorisch bewegten Paarungs-Bauteile gelangen. Damit wird eine insbesondere schleifende Abnutzung mit Verschleiß von Systemkomponenten weitgehend verhindert bzw. langfristig verzögert, so dass die Standzeit des Systems erhöht ist und Reparatur-Intervalle verlängerbar sind.

Es versteht sich, dass je nach Konstruktionsprinzip des Siebkettenförderers bzw. des entsprechend den Anschlussstücken variabel ausführbaren Riemenschlosses im Bereich der Riemenenden auch mehrere der Gelenkverbindungen als abdichtbare Bauteilpaarungen ausgeführt sein können. Ebenso ist vorgesehen, dass im Bereich der jeweiligen Gelenkverbindung(en) bzw. der Bauteilpaarung(en) mehrere abdichtbaren Bereiche in das System integriert werden.

Denkbar ist auch, dass das erfindungsgemäße Konstruktionsprinzip mit einer abdichtbaren Bauteilverbindung an einem Siebkettenförderer weiter verbessert und darauf gerichtet werden kann, dass die Gelenkverbindung eine fluiddichte Abdichtung aufweist. Damit kann zusätzlich das ungewollte Eindringen von Flüssigkeit, insbesondere Wasser, vermieden werden, so dass die Bildung von Rost unterbunden ist.

Durch weitere technische Optimierungen ist denkbar, die im Bereich der Gelenkverbindung vorgesehenen Bauteilpaarungen durch unmittelbar gleitend aufeinanderliegende und damit eine Abdichtung bildende Gleitflächen zu definieren. Diese Gleitflächen können durch entsprechende Stützprofile an den ineinandergreifenden Bauteilen gebildet sein.

Eine für Standzeit und Verschleiß optimale Gestaltung des Siebkettenförderers sieht vor, dass die zumindest eine Gelenkverbindung im Bereich der jeweiligen Bauteilpaarung des Riemenschlosses mit jeweils zumindest zwei die Abdichtung bewirkenden und im Bereich der Bauteilpaarung beabstandeten Dichtungselementen versehen wird.

Aus den unterschiedlichen Möglichkeiten der konstruktiven Umsetzung dieser "Scharnierverbindung" ergibt sich, dass die im Bereich der Anschlussstücke vorgesehenen Bauteilpaarungen jeweils in Form einer Stab-Hülsen-Struktur oder einer Stab-Buchsen-Struktur ausgebildet sein können. Im Bereich dieser Steckstrukturen sind dann die jeweiligen Dichtungselemente in das "Schwenksystem" so integriert, dass bei einer Kontakt- und Relativbewegung von Grundkörper und Gegenkörper keine Schmutzpartikel in die erfindungsgemäß verschlossene innere Zone des Gelenks eindringen können.

Das Konzept der Gelenkverbindungen ist dabei darauf gerichtet, dass deren Bauteile mit jeweiligen als spezielle Verbindungsstäbe ausgebildeten "Querförderstäben" versehen werden. Diese Verbindungsstäbe können in ihrer Längs- bzw. Endkontur von den an sich bekannten Querförderstäben - die beispielsweise mit Nietverbindung zum Trägerriemen hin versehen sind - abweichend als durchgehend zylinderförmige Stäbe ausgeführt sein, so dass insbesondere die Steckverbindung der Verbindungsteile an den Anschlussstücken einfach realisiert werden kann und ein schneller Einbau sowie Wechsel von Komponenten möglich ist.

Ausgehend von diesem Grundkonzept ist vorgesehen, dass jeweils zwei paarweise zusammenwirkende Dichtungselemente über die Breite der Riemenenden bzw. der Steckverbindung beabstandet sind und damit diese beiden Dichtungselemente den Endbereich zumindest eines jeweiligen Verbindungsstabes abdichten.

Diese gelenkige Ausführung des Riemenschlosses sieht in einer weiteren Ausführung vor, dass die im Bereich von einander zugeordneten Riemenenden verlaufenden Verbindungsstäbe jeweils eine Querachse für eine der abdichtbaren Gelenkverbindungen bilden und zwischen diesen beiden Gelenkverbindungen ein jeweils die beiden Verbindungsstäbe gelenkig erfassender Verbinder vorgesehen ist.

Dabei ist vorgesehen, dass die mit den Dichtungselementen im hülsen- oder buchsenförmigen Bereich zusammenwirkenden Verbindungsstäbe am jeweiligen Anschlussstück mit zumindest einem als Verdrehsicherung wirkenden Spannstift fixierbar sind.

Eine für die Demontage und Montage des Riemenschlosses optimale Konstruktion wird dadurch erreicht, dass der im Bereich des Riemenschlosses vorgesehene Verbinder seinerseits aus zumindest zwei teilbaren Zwischenstücken gebildet wird. Diese beiden Zwischenstücke des Verbinders sind mit zumindest bereichsweise formschlüssig ineinandergreifenden Stützkonturen versehen. Damit kann durch eine einfache "Steckverbindung" - in Längs- oder Querrichtung des Siebkettenförderers - eine schnelle Montage und Demontage erfolgen und die beiden Teile des Verbinders sind dann formschlüssig und drehfest vormontiert.

Die endgültige Montage im Bereich dieses Riemenschlosses kann dadurch realisiert werden, dass im Bereich der beiden Zwischenstücke ein diese gemeinsam in der formschlüssigen "Stecklage" erfassender Querbolzen vorgesehen ist. Mittels einer an diesem einenends vorgesehenen Splintsicherung können die beiden scharnierartig komplementären Teile des Zwischenstückes fixiert werden. Durch ein vergleichsweise einfaches Herausnehmen des Querbolzens kann das Riemenschloss an dieser Position im Bedarfsfall auch geöffnet werden, so dass eine reparaturfreundliche Konstruktion erreicht ist.

Dieses Konzept des Verbinders mit zwei Zwischenstücken führt zu der an sich bekannten scharnierartigen Konstruktion. Die beiden neuartig verbundenen Teile des Zwischenstücks sind im Bereich des Querbolzens mit einer parallel zu den benachbarten Verbindungsstäben verlaufenden Nut-Feder-Verbindung als die formschlüssige Profilierung versehen. Diese ist mit geringem Aufinrand herstellbar und kann an unterschiedliche Größen von Verbindern einfach angepasst werden. Es versteht sich, dass im Bereich dieser Zwischenstücke des Verbinders mehrere das Eindringen von Erdpartikeln o. dgl. Umgebungsteilen verhindernde Dichtungselemente vorgesehen sind.

In einer weiteren Ausführung ist denkbar, dass an Stelle des vorbeschriebenen zweiteiligen Verbinders ein einteiliges Formprofilteil vorgesehen ist. Dieses kann unmittelbar mit den Anschlussteilen des Trägerriemens zusammenwirken und dabei im Bereich der Verbindungsstäbe zwei Gelenkverbindungen definieren, die mit der erfindungsgemäßen Abdichtung zu versehen sind.

Die effektive konstruktive Umsetzung der abdichtbaren Bauteilpaarungen sieht vor, dass die paarweise in die jeweilige Gelenkverbindung integrierten Dichtungselemente in Form von an sich bekannten Berührungsdichtungen ausgeführt werden. Dabei können diese Dichtungselemente auch mehrteilig ausgebildet sein.

Neben einer formschlüssigen Fixierung der Dichtungselemente ist auch vorgesehen, dass die Dichtungselemente mittels einer radialen und/oder tangentialen Anpressung in der Abdichtlage fixiert werden.

Für die formschlüssige Fixierung der Dichtungselemente ist vorgesehen, dass im Bereich der Verbinder und/oder im Bereich der von diesem aufgenommenen Verbindungsstäbe eine jeweilige Formausnehmung zur Aufnahme der Dichtungselemente vorgeformt wird.

Ebenso ist denkbar, dass mehrere der Dichtungselemente zu einer Dichtungsbaugruppe kombiniert werden. Eine optimale Ausführung sieht vor, dass im Bereich der Bauteilpaarung eine O-Ringdichtung und eine Labyrinthdichtung zusammenwirken.

Weitere Einzelheiten und Vorteile der Erfindung ergeben sich aus der nachfolgenden Beschreibung und den Zeichnungen, die mehrere Ausführungsbeispiele des erfindungsgemäßen Siebkettenförderers mit abdichtbaren Gelenkverbindungen veranschaulichen. In der Zeichnung zeigen:
- Fig. 1: eine Perspektivdarstellung einer ersten Ausführung des erfindungsgemäßen Riemenschlosses im Bereich zweier Anschlussstücke,
- Fig. 2: eine Vorderansicht des Riemenschlosses gemäß Fig. 1,
- Fig. 3: eine Seitenansicht des Riemenschlosses gemäß Fig. 1,
- Fig. 4: eine Draufsicht des Riemenschlosses gemäß Fig. 1,
- Fig. 5: eine Schnittdarstellung gemäß einer Linie V-V in Fig. 4,
- Fig. 6 bis Fig. 12: jeweilige Schnittdarstellungen gemäß einer Linie VI-VI in Fig. 2 mit unterschiedlichen Ausführungen jeweiliger Dichtungselemente im Bereich von zwei Gelenkverbindungen am Riemenschloss,
- Fig. 13: eine Perspektivdarstellung ähnlich Fig. 1 mit einer zweiten Ausführung des Riemenschlosses mit einteiligem Verbinder,
- Fig. 14: eine Vorderansicht des Riemenschlosses gemäß Fig. 13,

- Fig. 15: eine Draufsicht des Riemenschlosses gemäß Fig. 13,
- Fig. 16: eine Schnittdarstellung gemäß einer Linie X-X in Fig. 14,
- Fig. 17: eine perspektivische Ausschnittsdarstellung des Siebkettenförderers für Hackfruchterntemaschinen mit dem erfindungsgemäßen Riemenschloss gemäß Fig. 1,
- Fig. 18: eine vergrößerte Ausschnittsdarstellung im Bereich des Riemenschlosses gemäß Fig. 17,
- Fig. 19: eine dritte Ausführung des Riemenschlosses mit nur einer Gelenkverbindung,
- Fig. 20: eine Draufsicht des Riemenschlosses gemäß Fig. 19, und
- Fig. 21: eine Schnittdarstellung der Gelenkverbindung in Fig. 20 gemäß einer Linie X-X.

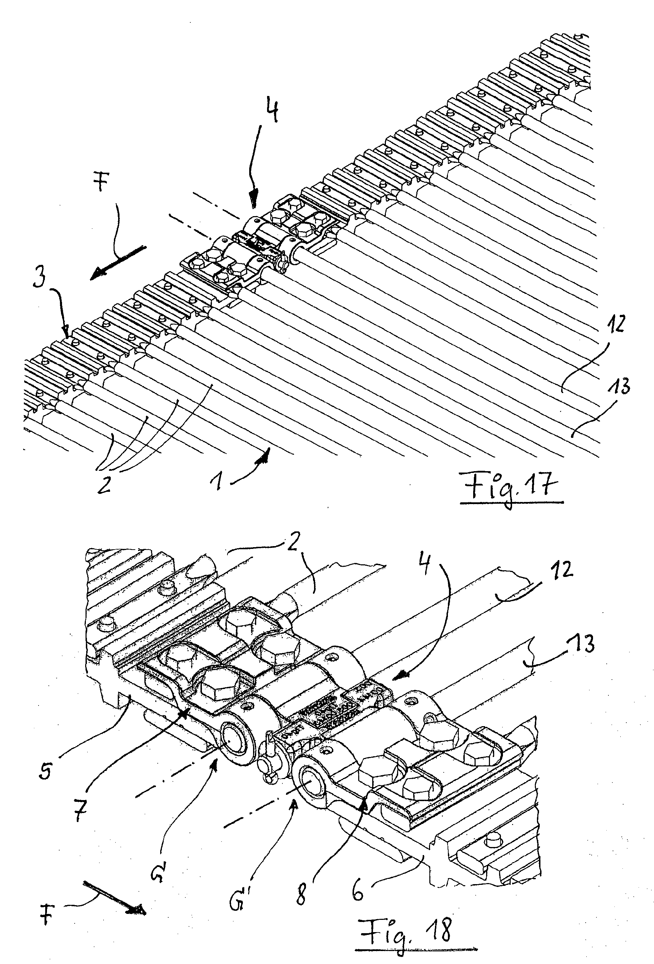

In Fig. 17 und Fig. 18 ist ein Siebkettenförderer 1 - für eine nicht näher dargestellte Hackfruchterntemaschine - ausschnittsweise veranschaulicht. Derartige landtechnische Siebkettenförderer 1 sind im Bereich zumindest eines jeweilige Querförderstäbe 2 aufnehmenden Trägerriemens 3 mit einem Riemenschloss 4 versehen. Derartige Riemenschlösser 4 weisen im Bereich von jeweilige Riemenenden 5, 6 erfassenden Anschlussstücken 7, 8 zumindest eine durch eine (Strich-Punkt-Linie verdeutlichte) scharnierartige Gelenkverbindung G auf. In der dargestellten Ausführung des Riemenschlosses 4 gemäß Fig. 18 wird deutlich, dass dieses mit zwei Gelenkverbindungen G, G', G" versehen ist.

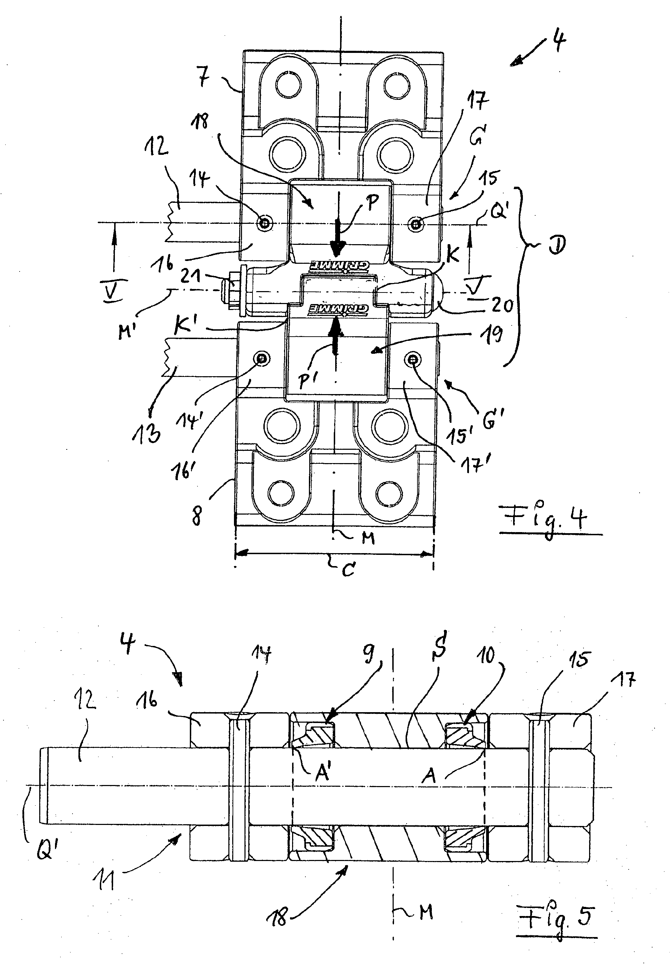

Das erfindungsgemäße Konzept sieht vor, dass die zumindest eine Gelenkverbindung G, G', G" des Riemenschlosses 4 mit einer jeweils zumindest gegen ein Eindringen von Schmutzpartikeln (nicht dargestellt) abdichtbaren Bauteilpaarung versehen wird. Die konstruktive Umsetzung sieht vor, dass die von den jeweiligen Gelenkverbindungen G, G', G" gebildeten Bauteilpaarungen mit mindestens einer jeweiligen Abdichtung A, A' (Fig. 5) ausgestattet werden.

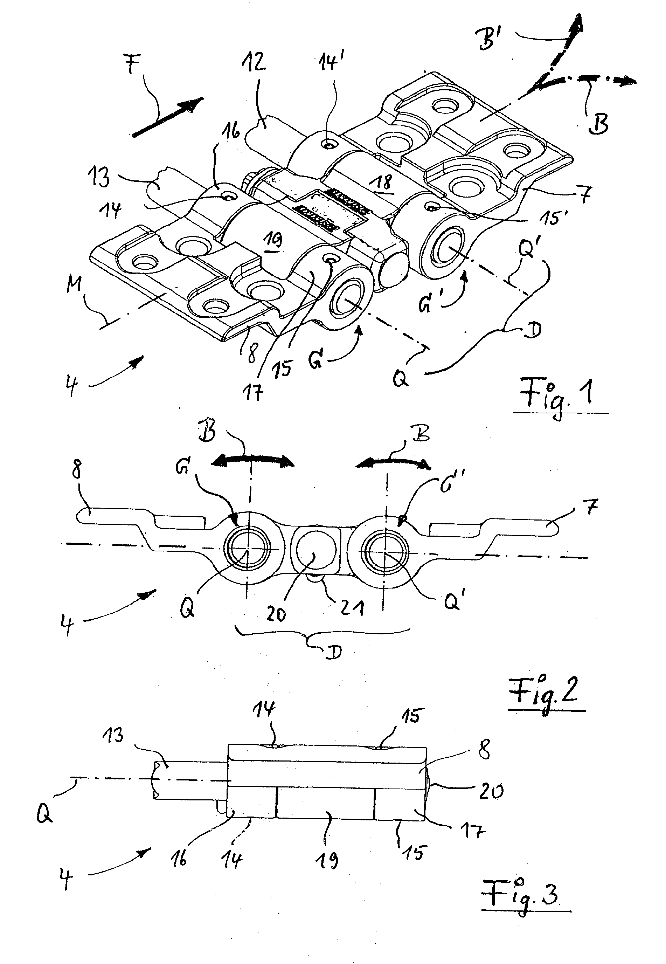

Aus den jeweiligen Ansichtsdarstellungen diese optimierten Riemenschlosses 4 gemäß Fig. 1 bis Fig. 4 wird deutlich, dass der damit versehene Siebkettenförderer 1 gemeinsam mit den Bauteilen des Riemenschlosses 4 in einer Förderrichtung F verlagert wird. Bei dieser Benutzungssituation werden ausgehend von der Längsmittelebene M jeweilige Bewegungsbahnen B, B' durchfahren. Dabei werden an den Bauteilpaarungen im Bereich der Gelenkverbindung G, G', G" jeweils entsprechende rotatorische (B) und/oder translatorische (B') Bewegungskomponenten wirksam. In die jeweiligen Spaltbereiche S (Fig. 5) zwischen den Baugruppen der Gelenkverbindungen G, G', G" kann dabei Umgebungsschmutz eingetragen werden, so dass insbesondere durch erhöhte Reibung eine entsprechende abrasive Abnutzung an den "bewegten" Teile erfolgt und diese - bisher - nach einer vergleichsweise kurzen Einsatzzeit zu Reparaturaufwand führt.

Dieser - unter Erntebedingungen auf sandhaltigen Böden besonders intensive - Abnutzungsvorgang kann nunmehr durch die erfindungsgemäße Abdichtung der Gelenkverbindungen G, G', G" eingeschränkt werden. In Ansehung der variabel ausführbaren Bauteilkombinationen im Bereich des Riemenschlosses 4 ergibt sich, dass der Förderer 1 im Bereich der Riemenenden 5, 6 auch mit mehreren abdichtbaren Gelenkverbindungen G, G', G" und den entsprechenden Abdichtsystemen versehen sein kann und damit ein "verschleißfreies" Riemenschloss 4 definiert wird.

In Fig. 5 ist die Gelenkverbindung G des Riemenschlosses 4 in einer Schnittdarstellung gemäß einer Linie V-V in Fig. 4 dargestellt. Dabei wird die bevorzugte Ausführung dieser Bauteilpaarung deutlich, die mit zwei die Abdichtung A, A' bewirkenden Dichtungselementen 9, 10 versehen ist. Zur Verdeutlichung dieser das Eindringen von Partikeln (und/oder Flüssigkeit) zumindest in den inneren Spaltbereich S verhindernden Schutzwirkung sind die jeweiligen Abdichtungen als eine - mit unterbrochenen Strichen dargestellte - Linie A, A' veranschaulicht.

Damit wird deutlich, dass im Bereich der jeweiligen Gelenkverbindung G, G', G" bzw. der Bauteilpaarung des Riemenschlosses 4 mehrere abdichtbare Bereiche vorgesehen sind. Eine weitere technische Ausgestaltung dieser bei A, A' abdichtbaren Bereiche ist dahingehend denkbar, dass die Gelenkverbindungen G, G', G" auch mit einer fluiddichten Abdichtung versehen sein können (nicht dargestellt).

Ebenso ist denkbar, dass im Bereich der Gelenkverbindungen G, G', G" die Bauteilpaarungen mit einer unmittelbar gleitenden Abdichtung ausgeführt sind und dabei zumindest bereichsweise aufeinanderliegende Gleitflächen (ähnlich den Abdichtungen A, A' in Fig. 5) so zusammenwirken, dass ein Eindringen von Schmutzpartikeln verhindert ist.

Aus der Zusammenschau der Ausführungsform gemäß Fig. 1 bis Fig. 5 wird deutlich, dass die im Bereich der Anschlussstücke 7 und 8 vorgesehenen Bauteilpaarungen zur Bildung des Riemenschlosses 4 jeweils in Form einer Stab-Hülsen-Struktur oder einer Stab-Buchsen-Struktur ausgebildet sein können. Als vorteilhaft hat sich eine Gestaltung gezeigt, bei der die Gelenkverbindungen G, G', G" mit jeweiligen als Verbindungsstäbe 12, 13 ausgebildeten "Querförderstäben" versehen sind. Aus der Schnittdarstellung gemäß Fig. 5 wird deutlich, dass dabei eine Stab-Hülsen-Struktur 11 gebildet ist.

Bei dieser beidseitig "offenen" Struktur ergibt sich als konstruktive Konsequenz, dass jeweils zwei paarweise zusammenwirkende Dichtungselemente 9, 10 über die Breite C (Fig. 4) der Anschlussstücke 7, 8 bzw. des Riemenschlosses 4 beabstandet sind. In der dargestellten Ausführung ist vorgesehen, dass die beiden Dichtungselemente 9 und 10 im jeweils mittleren Bereich der noch näher zu beschreibenden Gelenkverbindung G, G', G" angeordnet sind (Fig. 5).

Die aus Fig. 1 bis Fig. 12 ersichtliche Ausführung des Riemenschlosses 4 zeichnet sich dadurch aus, dass die im Bereich von einander zugeordneten Anschlussstücken 7, 8 verlaufenden Verbindungsstäbe 12, 13 jeweils eine Querachse Q, Q' für eine der abdichtbaren Gelenkverbindungen G, G', G" bilden. Dabei ist zwischen diesen beiden Gelenkverbindungen G, G', G" ein jeweils deren Verbindungsstab 12 bzw. 13 gelenkig erfassender Verbinder D vorgesehen.

Diese Konstruktion sieht vor, dass die mit den Dichtungselementen 8, 9 in hülsenförmigen Bereichen zusammenwirkenden Verbindungsstäbe 12, 13 an den jeweiligen Anschlussstücken 7, 8 mit zumindest einem als Verdrehsicherung wirkenden Spannstift 14, 15 bzw. 14', 15'fixierbar sind. In der dargestellten hülsenförmigen Ausführung dieses Verbindungsbereiches sind die Anschlussstücke 7, 8 mit beabstandeten Hülsenansätzen 16 und 17 sowie 16' und 17' versehen, wobei ein zwischen diesen paarweise zusammenwirkenden Ansätzen 16, 17; 16' 17' befindlicher Teil 18, 19 des Verbinders D den jeweiligen Verbindungsstab 12, 13 gelenkig umfasst. Damit ist eine an sich bekannte "scharnierartige" Gelenkverbindung definiert, wobei der Verbinder D zumindest bereichsweise um die beiden Verbindungsstäbe 12, 13 schwenkbar ist (Pfeil B, Fig. 2).

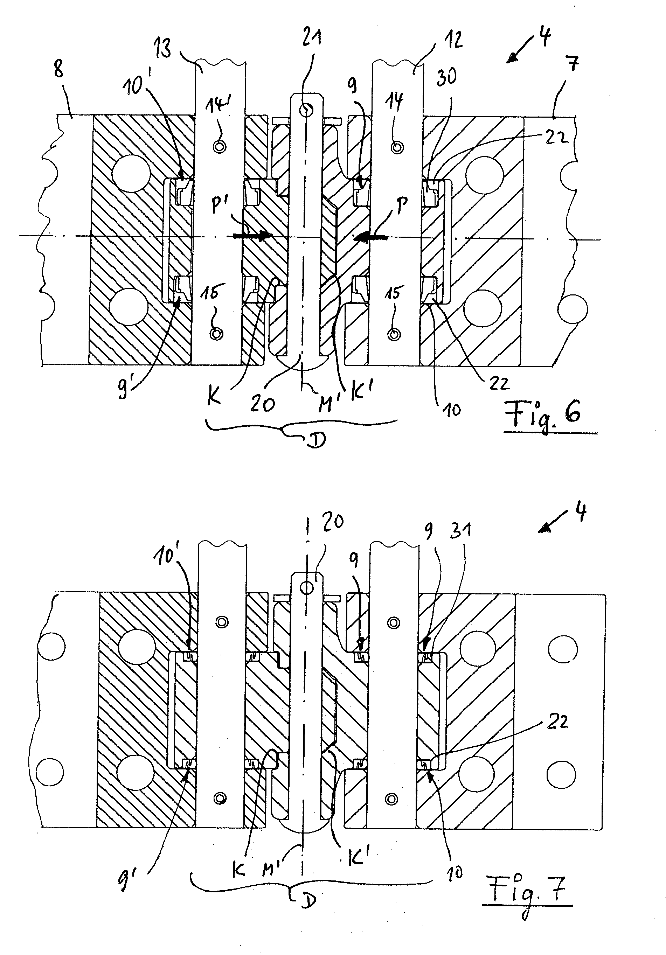

Aus der Zusammenschau von Fig. 4 und den jeweiligen Schnittdarstellungen gemäß Fig. 6 bis Fig. 12 wird deutlich, dass der Verbinder D aus zumindest zwei teilbaren Zwischenstücken 18, 19 gebildet ist. Diese weisen die vorbeschriebene Ausführung der jeweiligen Gelenkverbindung G, G', G" mit den Verdrehsicherungen 14, 15; 14', 15' zum jeweiligen Verbindungsstab 12, 13 hin auf.

Das Konzept dieses zweiteiligen Verbinders D sieht vor, dass die beiden Zwischenstücke 18 und 19 zumindest bereichsweise formschlüssig ineinandergreifend ausgebildet sind. Dieser formschlüssige Verbindungseingriff (Kontur K, K') ist so ausgeführt, dass durch eine Steckverbindung (Pfeil P, P', Fig. 4) die beiden Zwischenteile 18 und 19 verdrehfest ineinandergreifen. Dabei ist ein ebenfalls "scharnierartiger" Verbindungseingriff (Fig. 6) erreicht, wobei dieser Verbindungseingriff durch einen Querbolzen 20 mit Splintsicherung 21 gesichert wird. Damit ist die Kraftübertragung in Längsrichtung des Systems (Förderrichtung F, Fig. 1) möglich.

Aus den Schnittdarstellungen der Zeichnungen ist ersichtlich, dass die beiden Zwischenstücke 18, 19 des Verbinders D im Bereich des Querbolzens 20 eine parallel zu den benachbarten Verbindungsstäben 12, 13 verlaufende Nut-Feder-Verbindung K, K' aufweisen. Im Bereich der Zwischenstücke 18, 19 sind dann paarweise gegenüberliegend die das Eindringen von Erdpartikeln o. dgl. Umgebungsteile verhindernden Dichtungselemente 9, 10 sowie 9', 10' angeordnet (Fig. 6 bis Fig. 12).

Mit dieser Konstruktion wird ein "geschlossenes System" so in das Riemenschloss 4 integriert, dass dieses optimal montiert und demontiert werden kann. Auch unter den verschmutzungsintensiven Bedingungen auf einer Erntefläche kann die "steife" Bolzen-Splint-Verbindung 20, 21 einfach gelöst werden. Gleichzeitig werden die geschützten Gelenkteile G, G', G" weder beschädigt noch durch eindringenden Schmutz belastet. Damit sind Reparatur- und/oder Wechselphasen an den erfindungsgemäßen Siebkettenförderern 1 besonders einfach möglich.

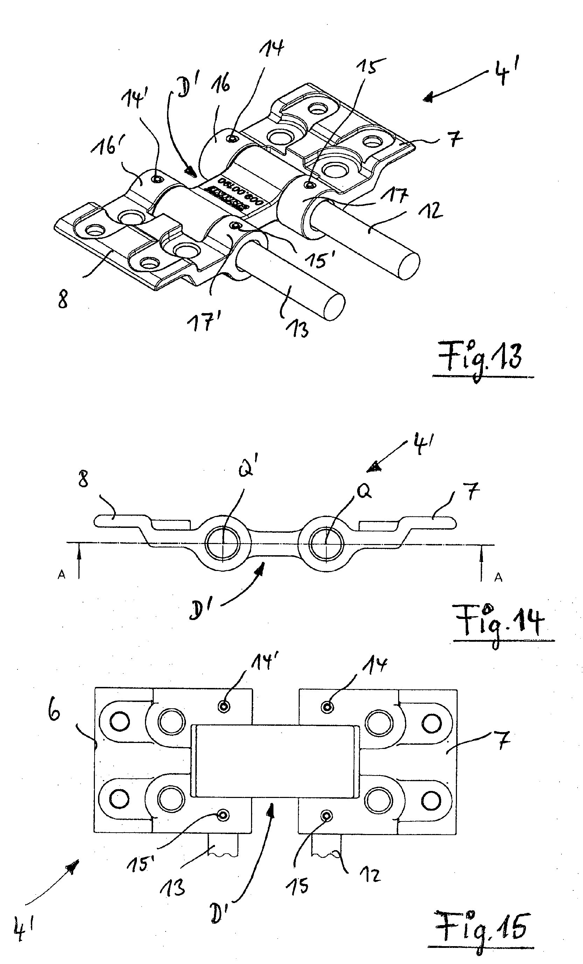

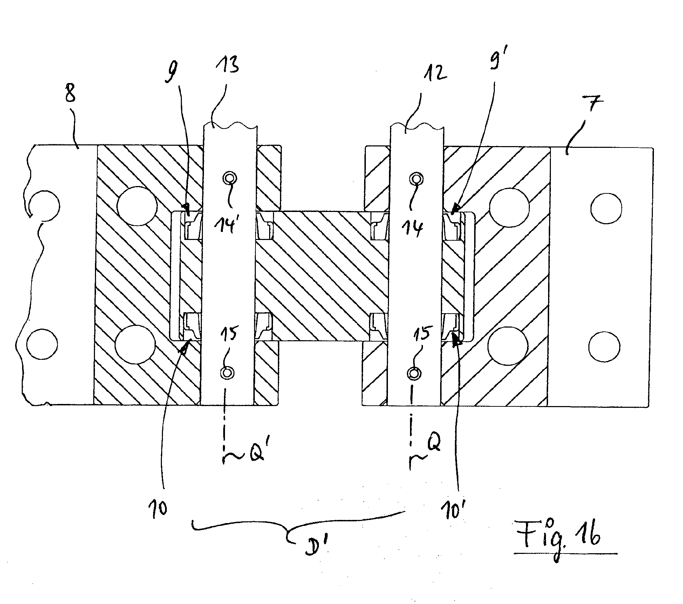

Eine zweite Ausführung des vorbeschriebenen Abdichtungskonzepts ist mit einem Verbinder D' (Fig. 13 bis Fig. 16) versehen, wobei dieser Verbinder als eine einteilige Baugruppe ausgeführt ist. Aus den jeweiligen Ansichten gemäß Fig. 14 (Stirnansicht), Fig. 15 (Draufsicht) und Fig. 16 (Schnittdarstellung im Bereich der Dichtungselemente 9, 10; 9', 10') wird deutlich, dass hier in ähnlicher Konfiguration die bereits beschriebenen Bauteile zusammenwirken.

Für sämtliche der vorbeschriebenen Ausführungen von Riemenschlössern 4 bzw. 4' hat es sich als vorteilhaft herausgestellt, dass die paarweise in die jeweilige Gelenkverbindung G, G', G" integrierten Dichtungselemente 9, 10 und 9', 10' in Form von an sich bekannten Berührungsdichtungen ausgebildet sind. Diese sind entsprechend dem Verbinder D jeweils spiegelbildlich zur Quermittelebene M' angeordnet, so dass die sich entsprechenden Einzelteile der Abdichtungen A', A nicht jeweils einzeln zu beschreiben sind und sich aus den Darstellungen ergeben.

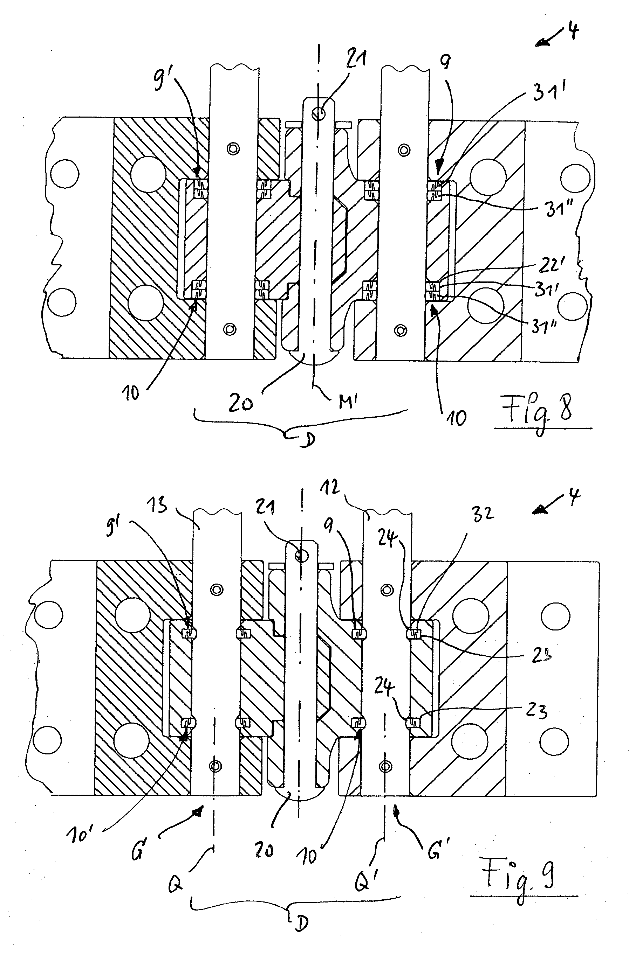

In Fig. 6 ist eine einteilige Ausführung der Berührungsdichtung dargestellt, wobei diese vorzugsweise in Form eines Polyamid-Abstreifers 30 ausgebildet ist und dabei eine entsprechende Einpressung der Dichtungen im Bereich eines jeweiligen faserverstärkten Außenringes erfolgt. In der Ausführung gemäß Fig. 7 ist ein als Abstreifer aus Gummi ausgebildetes Dichtungselement 31 dargestellt, wobei hier eine vergleichsweise einfach ausgebildete Ringnut 22 benutzt wird. Der radial vorgespannte Dichtring 31 dichtet dabei zwischen dem Verbindungsstab 12, 13 und dem jeweiligen Zwischenstück 18, 19 des Riemenschlosses 4 ab. Die radiale Vorspannung dieses Abstreifers 31 ermöglicht es, dass nach einer längeren Einsatzdauer auftretender Verschleiß durch die elastische Wirkung der Gummidichtung ausgeglichen werden kann. In Fig. 8 ist eine ähnliche Ausführung dargestellt, wobei hier zwei Abstreifer 31', 31" in einer Ringnut 22' hintereinander angeordnet sind.

Bei der Konstruktion gemäß Fig. 9 ist ebenfalls ein Abstreifer 32 aus Gummi vorgesehen, wobei dieser in komplementäre nutförmige Aufnahmeöffnungen 23 und 24 im Bereich des Zwischenstückes 18, 19 bzw. des Verbindungsstabes 12, 13 eingreift. Dazu werden entsprechende Nutprofile in die beiden zusammenwirkenden Bauteile eingeformt.

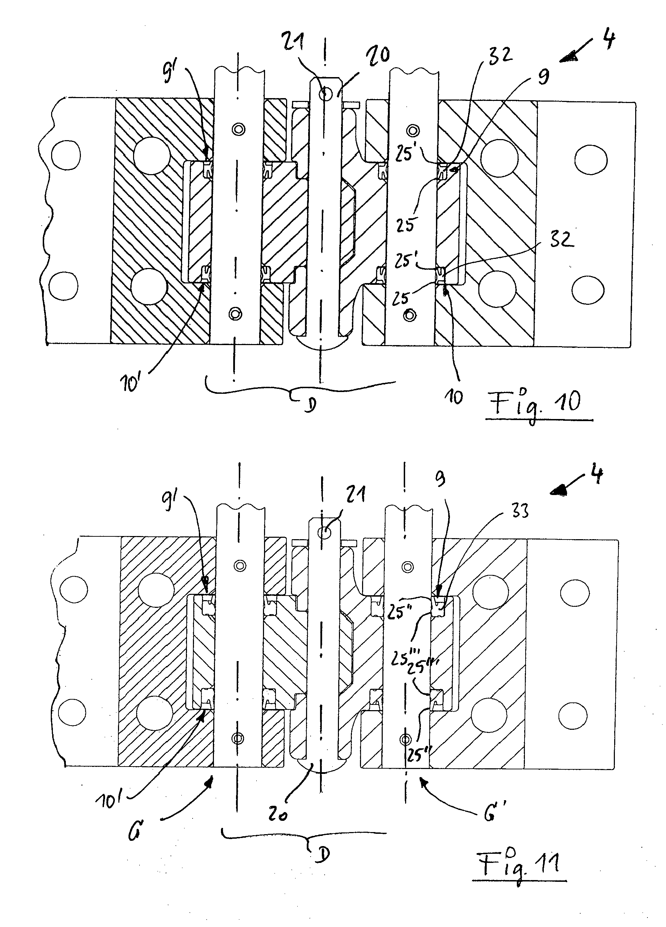

Bei der in Fig. 10 dargestellten Ausführung wird ein Abstreifer 32 aus Polyurethan eingesetzt, wobei dieser eine nach zwei Seiten wirkende Dichtlippe 25, 25' aufweist und damit eine besonders effiziente Abdichtung möglich ist. Eine ähnliche Ausführung ist in Fig. 11 dargestellt, wobei hier eine massive Ausführung eines Polyamid-Abstreifers 33 (ähnlich Fig. 6) mit Dichtlippen 25" und 25'" vorgesehen ist.

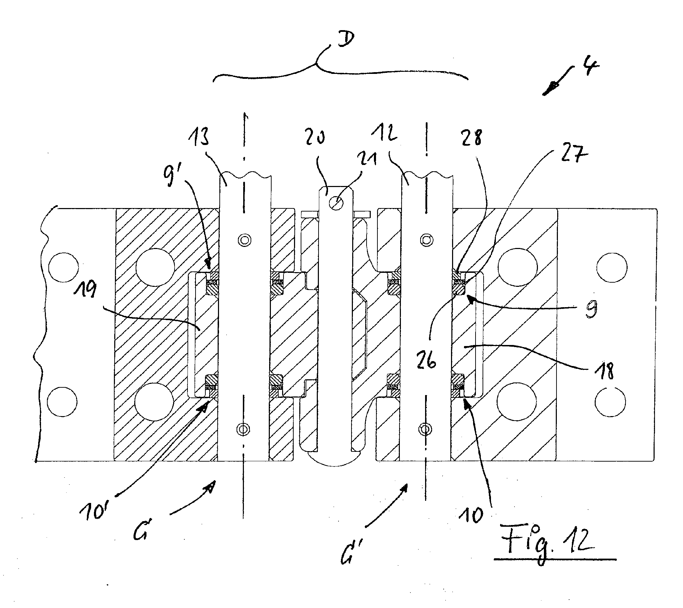

Eine weitere denkbare Ausführung mit einem mehrteiligen Dichtungselement 9, 10 bzw. 9', 10' ist in Fig. 12 dargestellt, wobei hier im Bereich des Zwischenteils 18 bzw. 19 eine einen O-Ring 26, eine Distanzscheibe 27 und einer äußere Distanzscheibe 28 aufnehmende Spann-Verbindung dargestellt ist. Der O-Ring 26 ist dabei so dimensioniert, dass mittels der beiden Distanzscheiben 26, 27 eine entsprechende Press-Fixierung erreicht ist.

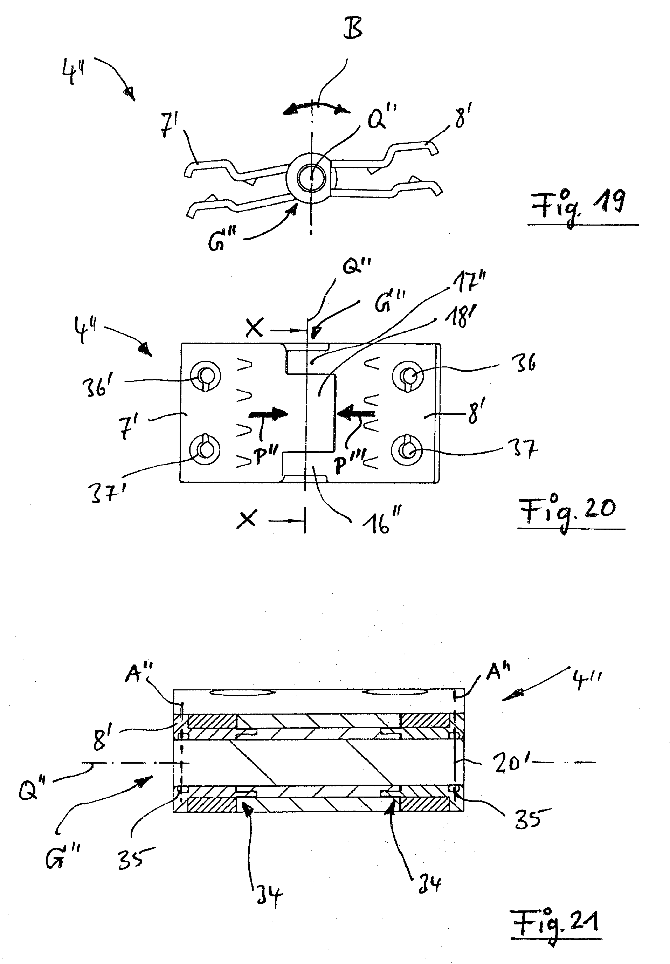

In einer weiteren Ausführung (Fig. 19 bis Fig. 21) ist denkbar, eine entsprechende Labyrinth-Dichtung 34 in das System zu integrieren.

Diese dritte Ausführung eines abgedichteten Riemenschlosses 4" gemäß Fig. 19 bis Fig. 21 ist mit einer "direkten" Verbindungskonstruktion im Bereich der beiden Anschlussstücke 7', 8' versehen. Diese Anschlussstücke sind nunmehr zur Bildung des nur einen Gelenkverbinders G" mit jeweils komplementären Hülsenansätzen 16", 17" und 18' geformt (Fig. 20). Im Bereich dieser Hülsenansätze wird als einziger Verbinder der Querverbinder 20' eingesetzt.

Dabei können die Anschlussstücke 7', 8' im Bereich jeweiliger schräger Verbindungsöffnungen 36, 37, 36', 37' direkt mit den hier nicht dargestellten Riemenenden 5, 6 (Fig. 18) verbunden werden.

Aus Fig. 21 wird deutlich, dass der hier vorgesehene Querverbinder 20' zusätzlich zur inneren Labyrinth-Dichtung 34 auch noch eine Randdichtung 35 als "Zusatz-Abdichtung A" aufweisen kann.

## Patentansprüche

1. Siebkettenförderer für Hackfruchterntemaschinen, der im Bereich zumindest eines jeweilige Querförderstäbe (2) aufnehmenden Trägerriemens (3) mit einem Riemenschloss (4, 4', 4") versehen ist, das im Bereich von jeweilige Riemenenden (5, 6) erfassenden Anschlussstücken (7, 8) zumindest eine scharnierartige Gelenkverbindung (G, G', G") aufweist, **dadurch gekennzeichnet, dass** die Gelenkverbindung (G, G', G") als eine Bauteilpaarung ausgebildet ist, die gegen zumindest ein Eindringen von Schmutzpartikeln mit mindestens einer Abdichtung (A, A') versehen ist.

2. Siebkettenförderer nach Anspruch 1, **dadurch gekennzeichnet, dass** die Abdichtung (A, A') der Gelenkverbindung (G, G', G") bei einer rotatorischen und/oder translatorischen Bewegungen (B, B') im Bereich der Bauteilpaarung wirksam ist.

3. Siebkettenförderer nach Anspruch 1 oder 2, **dadurch gekennzeichnet, dass** das Riemenschloss (4) im Bereich der Riemenenden (5, 6) mehrere abgedichtete Gelenkverbindungen (G, G', G") aufweist.

4. Siebkettenförderer nach einem der Ansprüche 1 bis 3, **dadurch gekennzeichnet, dass** im Bereich der jeweiligen Gelenkverbindung(en) (G, G', G") bzw. der Bauteilpaarung(en) mehrere Abdichtungen (A, A') vorgesehen sind.

5. Siebkettenförderer nach einem der Ansprüche 1 bis 4, **dadurch gekennzeichnet, dass** die abgedichtete(n) Gelenkverbindung(en) (G, G', G") fluiddicht ausgebildet ist/sind.

6. Siebkettenförderer nach einem der Ansprüche 1 bis 5, **dadurch gekennzeichnet, dass** die im Bereich der Gelenkverbindung (G, G', G") vorgesehenen Bauteilpaarungen eine unmittelbar gleitende Abdichtung (A, A') mit zumindest bereichsweise aufeinanderliegenden Gleitflächen bilden.

7. Siebkettenförderer nach einem der Ansprüche 1 bis 5, **dadurch gekennzeichnet, dass** die Gelenkverbindung(en) (G, G', G") im Bereich der Bauteilpaarung des Riemenschlosses (4) mit jeweils zumindest zwei die Abdichtung (A, A') bewirkenden Dichtungselementen (9, 10, 9', 10') versehen ist/sind.

8. Siebkettenförderer nach Anspruch 7, **dadurch gekennzeichnet, dass** die im Bereich der Anschlussstücke (7, 8) vorgesehene(n) Bauteilpaarung(en) jeweils in Form einer Stab-Hülsen-Struktur (11) oder einer Stab-Buchsen-Struktur ausgebildet ist/sind.

9. Siebkettenförderer nach Anspruch 7 oder 8, **dadurch gekennzeichnet, dass** die Gelenkverbindung(en) (G, G', G") mit jeweiligen als Verbindungsstäbe (12, 13) ausgebildeten Querförderstäben (2) versehen sind.

10. Siebkettenförderer nach einem der Ansprüche 7 bis 9, **dadurch gekennzeichnet, dass** jeweils zwei paarweise zusammenwirkende Dichtungselemente (9, 10; 9', 10') über die Breite (C) der Riemenenden (5, 6) beabstandet sind und damit die Dichtungselemente (8, 9) den Endbereich zumindest eines jeweiligen Verbindungsstabes (12, 13) abdichten.

11. Siebkettenförderer nach einem der Ansprüche 7 bis 10, **dadurch gekennzeichnet, dass** die im Bereich von einander zugeordneten Riemenenden (5, 6) verlaufenden Verbindungsstäbe (12, 13) jeweils eine Querachse (Q, Q', Q") für eine der abdichtbaren Gelenkverbindungen (G, G') bilden und zwischen diesen beiden Gelenkverbindungen ein jeweils deren Verbindungsstab (12, 13) gelenkig erfassender Verbinder (D, D') vorgesehen ist.

12. Siebkettenförderer nach einem der Ansprüche 8 bis 11, **dadurch gekennzeichnet, dass** die mit den Dichtungselementen (9, 10; 9', 10') im hülsen- oder buchsenförmigen Bereich zusammenwirkende Verbindungsstäbe (12, 13) an den jeweiligen Anschlussstücken (7, 8) mit zumindest einem als Verdrehsicherung wirkenden Spannstift (14, 15) fixierbar sind und dabei ein dazwischenliegender Teil des Verbinders (D, D') gelenkig am Verbindungsstab (12, 13) abstützbar ist.

13. Siebkettenförderer nach Anspruch 11 oder 12, **dadurch gekennzeichnet, dass** der im Bereich des Riemenschlosses (4, 4') vorgesehene Verbinder (D) aus zumindest zwei teilbaren Zwischenstücken (18, 19) gebildet ist und diese jeweils eine der Gelenkverbindungen (G, G') aufweisen.

14. Siebkettenförderer nach einem der Ansprüche 11 bis 13, **dadurch gekennzeichnet, dass** die beiden Zwischenstücke (18, 19) des Verbinders (D) zumindest bereichsweise formschlüssig ineinandergreifend ausgebildet sind.

15. Siebkettenförderer nach einem der Ansprüche 11 bis 14, **dadurch gekennzeichnet, dass** im Bereich der beiden Zwischenstücke (18, 19) ein Querbolzen (20) mit Splintsicherung (21) vorgesehen ist.

16. Siebkettenförderer nach Anspruch 14, **dadurch gekennzeichnet, dass** die beiden Zwischenstücke (18, 19) des Verbinders (D) ihrerseits scharnierartig verbunden sind.

17. Siebkettenförderer nach einem der Ansprüche 11 bis 16, **dadurch gekennzeichnet, dass** die beiden Zwischenstücke (18, 19) des Verbinders (D) im Bereich des Querbolzens (20) eine parallel zu den benachbarten Verbindungsstäben (12, 13) verlaufende Nut-Feder-Verbindung (K, K') aufweisen.

18. Siebkettenförderer nach einem der Ansprüche 10 bis 17, **dadurch gekennzeichnet, dass** im Bereich der Zwischenstücke (18, 19) mehrere das Eindringen von Erdpartikeln o. dgl. Umgebungsteilen verhindernde Dichtungselemente (9, 10; 9', 10') vorgesehen sind.

19. Siebkettenförderer nach Anspruch 11 oder 12, **dadurch gekennzeichnet, dass** die Verbinder (D') als ein einteiliges Formprofilteil ausgebildet sind.

20. Siebkettenförderer nach einem der Ansprüche 1 bis 19, **dadurch gekennzeichnet, dass** die paarweise in die jeweilige Gelenkverbindung (G, G', G") integrierten Dichtungselemente (9, 10; 9', 10') in Form von an sich bekannten Berührungsdichtungen vorgesehen sind.

21. Siebkettenförderer nach einem der Ansprüche 1 bis 20, **dadurch gekennzeichnet, dass** die Dichtungselemente (9, 10; 9', 10') mehrteilig ausgebildet sind.

22. Siebkettenförderer nach einem der Ansprüche 1 bis 21, **dadurch gekennzeichnet, dass** die Dichtungselemente (9, 10; 9', 10') mittels einer radialen und/oder tangentialen Pressung in der Abdichtlage fixiert sind.

23. Siebkettenförderer nach einem der Ansprüche 11 bis 22, **dadurch gekennzeichnet, dass** im Bereich der Verbinder (D, D') und/oder im Bereich der Verbindungsstäbe (12; 13) eine jeweilige Formausnehmung (23, 24) zur Aufnahme der Dichtungselemente (9, 10) vorgesehen ist.

24. Siebkettenförderer nach einem der Ansprüche 1 bis 23, **dadurch gekennzeichnet, dass** mehrere der Dichtungselemente (9, 10) zu einer Dichtungsbaugruppe (26, 27, 28) kombiniert sind.

25. Siebkettenförderer nach Anspruch 24, **dadurch gekennzeichnet, dass** im Bereich der Bauteilpaarung eine O-Ringdichtung (26) und/oder eine Labyrinthdichtung (34) zusammenwirken.

26. Siebkettenförderer nach einem der Ansprüche 1 bis 25, **dadurch gekennzeichnet, dass** das Riemenschloss (4") jeweilige Anschlussstücke (7', 8') aufweist, an denen jeweils komplementäre sowie eine direkte Gelenkverbindung (G") mit einem Querverbinder (20') bildende Steckkonturen vorgesehen sind.

27. Siebkettenförderer nach einem der Ansprüche 1 bis 26, **dadurch gekennzeichnet, dass** bei der Montage oder Demontage des Trägerriemens (3) im Bereich des Riemenschlosses (4) nur die Verbindung von Querbolzen (20) und Splint (21) zu betätigen ist.

28. Siebkettenförderer nach Anspruch 27, **dadurch gekennzeichnet, dass** die abgedichtete Gelenkverbindung (G, G', G") ungeöffnet bleibt und damit unveränderte Bauteilpaarungen wirksam sind.
